# EUROPEAN PATENT APPLICATION

(11) **EP 2 322 883 A1**
(43) Date of publication of application: **18.05.2011**
(21) Application number: 10796908.1
(22) Date of filing: 07.07.2010
(51) Int. Cl.: F25D 13/00, A23L 3/365

(54) **STORAGE APPARATUS, AND STORAGE METHOD**

(30) Priority: 10.07.2009 JP 2009163442; 27.01.2010 JP 2010014950
(60) Divisional application: 11157705.2
(71) Applicant: Panasonic Corporation, Kadoma-shi Osaka 571-8501 (JP)
(72) Inventor: FUJII, Yuko, Chuo-ku, Osaka-shi Osaka 540-6207 (JP); KANAZAWA, Narutoshi, Chuo-ku, Osaka-shi Osaka 540-6207 (JP); NOBUE, Tomotaka, Chuo-ku, Osaka-shi Osaka 540-6207 (JP)
(74) Representative: Trösch, Hans-Ludwig
(86) International application number: PCT/JP2010/004430
(87) International publication number: WO 2011/004597

(57) **Abstract**

A storage device (1) includes a cooling unit (12) which cools an object (11), a cold storage compartment (13) which stores the object (11), and a microwave generation unit (14) which generates and applies a microwave to the object (11). The storage device sets the object (11) into a supercooled state by applying the microwave to the object (11).

## Description

### [Technical Field]

The present invention relates to a freezing method and a storage device.

### [Background Art]

In order to store perishable food or the like by freezing while keeping the quality of the food, it is important, during a freezing process, not to destroy cells of an organism and to prevent concentration (i.e., solute release from the cells). In general, when large needle crystals are formed in the perishable food during the freezing process, the cells of the perishable food are destroyed, which results in quality loss.

Therefore, it is preferable for ice crystals formed during the freezing process to be smaller. On this account, for freezing the perishable food, it is considered effective to reduce a duration in which a temperature of the perishable food is within a zone of maximum ice crystal formation (i.e., from 0°C to -5°C).

For example, the duration in which the temperature is within the zone of maximum ice crystal formation can be reduced by using a high-performance freezing device or a cryogenic liquid such as liquid nitrogen.

A storage device which performs rapid freezing by directly putting cold air into a cold storage compartment having a metallic plate on the bottom has been proposed (see Patent Literature 1).

Using this storage device, however, the perishable food is frozen using heat conduction of the metallic plate that comes in contact with the surface of the perishable food. Therefore, when the perishable food is large in size, the temperature of a part of the food stays longer within the zone of maximum ice crystal formation. Moreover, a temperature difference occurs between a part that comes in contact with the metallic place and a part that does not. This may cause cracking in the perishable food due to a stress produced between a frozen part and an unfrozen part.

In the case of the method employing a cryogenic liquid, although the duration in which the temperature of the food is within the zone of maximum ice crystal formation can be reduced, the system is complicated.

Also, as a method of reducing the duration in which the temperature of the food is within the zone of maximum ice crystal formation, the following method has been disclosed (see Patent Literature 2). This method: first rapidly cools a perishable food to near the freezing point; performs a slow cooling process to slowly cool the perishable food to below the freezing point so as to keep a temperature difference between the surface and inside of the perishable food small; and then performs rapid freezing after the slow cooling process.

Moreover, a technique to freeze a perishable food by cooling the perishable food through dielectric heating using an electromagnetic wave at one of medium, high, and very high frequencies has been disclosed (see Patent Literature 3).

### [Citation List]

### [Patent Literature]

[PTL 1]
   Japanese Unexamined Patent Application Publication No. 2005-83687
[PTL 2]
   Japanese Unexamined Patent Application Publication No. 8-252082
[PTL 3]
   Japanese Unexamined Patent Application Publication No. 2001-245645

### [Summary of Invention]

### [Technical Problem]

When the slow cooling process is performed, however, it takes too much time to complete freezing. This may cause the perishable food to be oxidized or cause bacterial growth, for example.

Also, when an electromagnetic wave at one of medium, high, and very high frequencies is used, it is difficult to obtain impedance matching of the food. In order to obtain the matching, the food needs to be sandwiched between two electrodes. Then, it is necessary to adjust an electrode spacing according to the size, thickness, and type of the food, thereby leading to a problem of increasing the size of the device. In addition, an antenna for applying electromagnetic waves at medium, high, and very high frequencies is large in size.

When medium, high, and very high frequency waves are used, it is thought that formed ice can be melted. However, when many ice crystals are formed, a formation speed of ice crystals is faster than melting speeds at the medium, high, and very high frequency waves. This means that it is difficult to control the freezing process in this case.

The present invention is conceived in view of the aforementioned problem and has an objective to provide a storage device and a storage method capable of high-quality freezing. The storage device and the storage method can freeze a perishable-food object while keeping the quality of the object, by controlling temperature variations of the object using a microwave so as to reduce the size of an ice crystal and prevent a cellular structure from being destroyed.

### [Solution to Problem]

The storage device in an aspect of the present invention is a storage device which cools and stores an object, the storage device including: a cold storage compartment which stores the object; a cooling unit which cools the object stored in the cold storage compartment; a microwave generation unit including a semiconductor device which generates a microwave to be applied to the object, a maximum electric power of the generated microwave being 100 watts or lower; and a control unit which controls an operation of the microwave generation unit.

With this, it is possible to cool the object while controlling the temperature variations of the object by applying the microwave to the object. In particular, a low-power microwave generation unit applies the microwave to the object with high accuracy, so that the object can be frozen while the temperature variations of the object are controlled. Especially an edge or the like of the object is the first to be cooled because of, for example, the surface area of the object and heat release from the object. Then, the temperature of the object gradually falls. Here, a radio wave of the microwave tends to be concentrated on the edge or the like of the object. On this account, it is possible to reduce the temperature variations of the object during the freezing process by controlling the output of the microwave with high accuracy. This allows freezing to be achieved while reducing the temperature variations of the object, thereby implementing high-quality freezing in which ice crystals are reduced in size.

Also, the storage device may further include a temperature detection unit which detects a temperature of the object, wherein, when the cooling unit is controlled so that the temperature of the object decreases, the control unit may cause the microwave generation unit to generate the microwave when the temperature detection unit detects the temperature equal to or lower than a predetermined threshold.

With this, timing of generating the microwave is adjusted according to the object. As a result, a supercooled state easily occurs, thereby achieving high-quality freezing.

Moreover, after the microwave generation unit generates the microwave, the control unit may cause electric power of the microwave generated by the microwave generation unit to be increased according to predetermined first information.

With this, the supercooled state can be forcefully terminated using the microwave. As a result, a high-quality frozen state of the object can be implemented.

Furthermore, after the microwave generation unit generates the microwave, the cooling unit may increase a cooling ability according to predetermined second information.

With this, by further cooling the object whose temperature has passed through the zone of maximum ice crystal formation, a high-quality state of frozen storage can be maintained for the object. As a consequence, high-quality freezing with no cell destruction can be achieved. Here, when the supercooled state is terminated, the object is not completely frozen and small ice crystals are uniformly formed in the object. An unfrozen part exists between these ice crystals. In order to prevent moisture in this unfrozen part from becoming a large ice crystal or prevent the uniformly-formed small ice crystals from growing with the moisture in the unfrozen part and becoming a large ice crystal, rapid freezing is performed after the supercooled state is terminated. Thus, by reducing the size of ice crystal, high-quality freezing with no cell destruction can be achieved.

Also, the temperature detection unit may include a reflected-power detection unit, and may detect the temperature of the object by detecting electric power of the microwave reflected without being applied to the object out of the microwave generated by the microwave generation unit.

With this, it is unnecessary to separately provide a device for detecting the temperature of the object.

Moreover, the control unit may change the frequency of the microwave generated by the microwave generation unit in a range from 300 MHz to 300 GHz, determine the frequencies at which the reflectance is 60% or higher using the reflected-power detection unit, and cause the microwave generation unit to generate the microwave at one of the determined frequencies.

With this, the object can efficiently absorb the microwave. Therefore, the temperature variations of the object can be reduced with accuracy and energy conservation for the storage device can be promoted. Also, since frequencies at which the microwave can be efficiently absorbed can be detected depending on the shape and size of the object, a weight sensor for detecting the weight of the object and an image sensor for detecting the size of the object do not need to be separately provided. Thus, the object can be cooled in a high-quality state.

A storage method in an aspect of the present invention includes applying a microwave to an object when a temperature of the object is in a range from a freezing point of the object to 10°C inclusive. Water molecules in the object start to link together at especially around 10°C, and molecular cohesion of water starts to be stronger at especially around 5°C. On account of this, by applying the microwave in the range including these temperatures, it becomes possible to efficiently control the molecular cohesion of water and also to control ice nucleation. Thus, the object can be stably set into the supercooled state. Also, the duration in which the microwave is applied can be reduced, which leads to energy conservation.

Furthermore, a switching unit which switches the output of the microwave generation unit may be provided. This allows switching between freezing and thawing. In the case of freezing, the output of the microwave is decreased. Then, the object is cooled using energy larger than energy to be absorbed by the object, and is maintained in the supercooled state or frozen after the supercooled state. In the case of thawing, the output of the microwave is increased so that energy to be absorbed by the frozen object is increased. Accordingly, both freezing and thawing can be implemented.

Also, when the object is in cold storage, an appropriate microwave may be applied to the object as a stimulus. This allows cold storage while promoting the growth of nutrients inside the object. Especially in the case of cold storage, by causing the object to react to the stimulus applied into the object by the microwave generation unit, nutrients inside an agricultural crop can be increased resulting from a biological defense reaction.

### [Advantageous Effects of Invention]

The storage method and the storage device according to the present invention are capable of controlling ice nucleation and ice growth necessary for freezing, by controlling molecular cohesion of water. With these, the object can be stably set into the supercooled state and also can instantly pass through the zone of maximum ice crystal formation.

Moreover, small ice crystals can be uniformly formed in the object. Accordingly, high-quality freezing with less cell destructions can be achieved.

### [Brief Description of Drawings]

[FIG. 1]

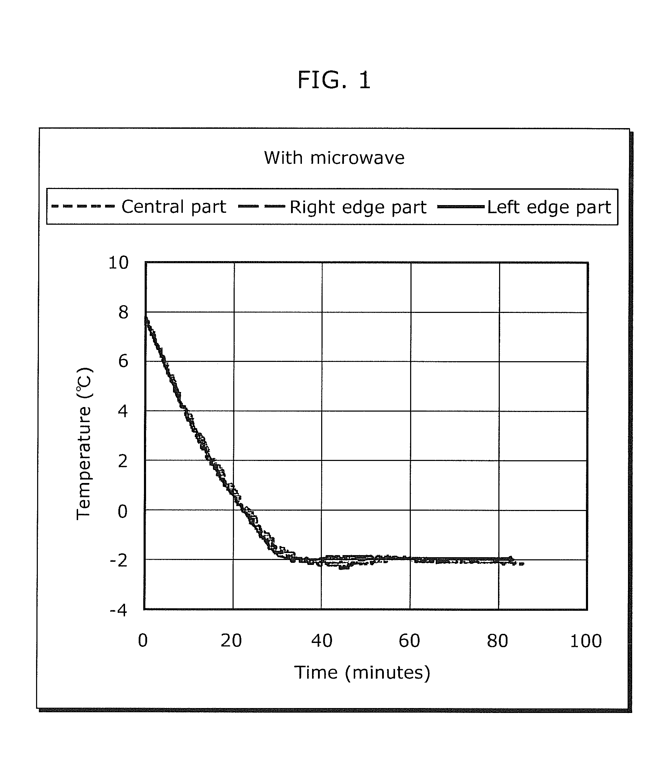

   FIG. 1 is a graph showing temporal changes in temperature for each part of an object to which a microwave is applied.
[FIG. 2]

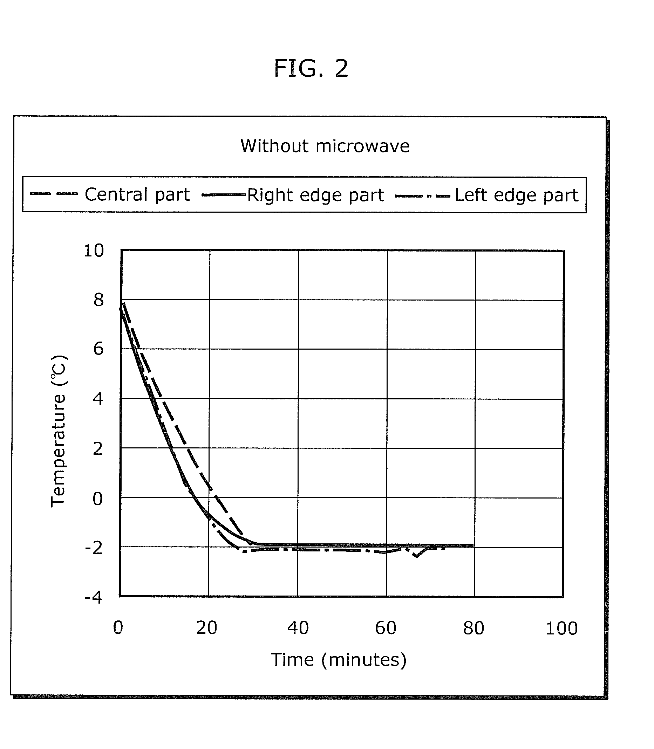

   FIG. 2 is a graph showing temporal changes in temperature for each part of the object to which the microwave is not applied.
[FIG. 3]

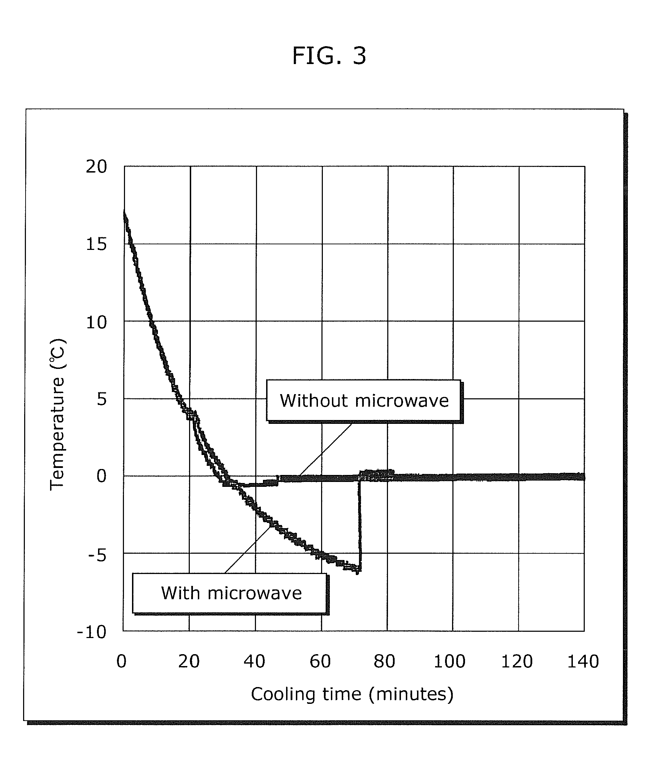

   FIG. 3 is a graph showing cooling curves of the object in the cases where the microwave is applied and not applied.
[FIG. 4]

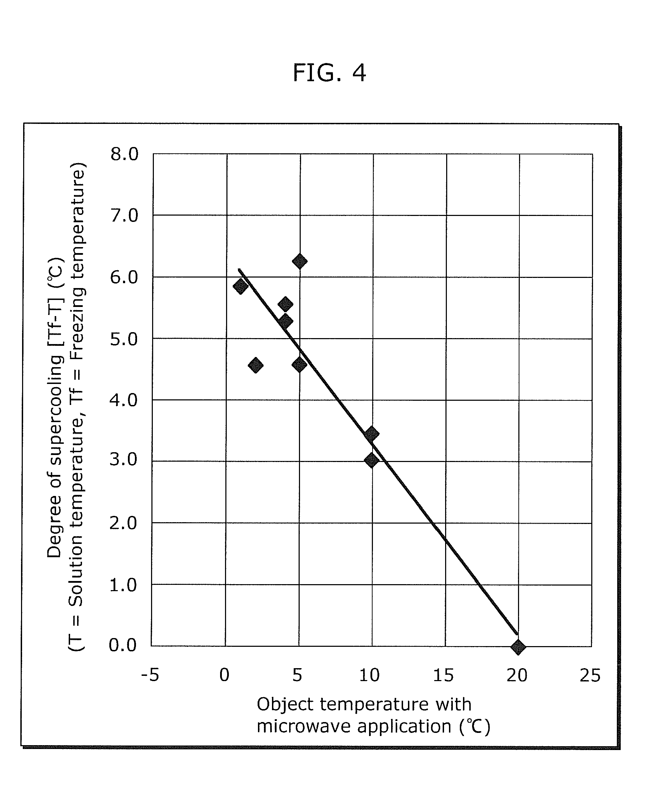

   FIG. 4 is a graph showing a relationship between a temperature of the object and a degree of supercooling in the case where the microwave is applied.
[FIG. 5]

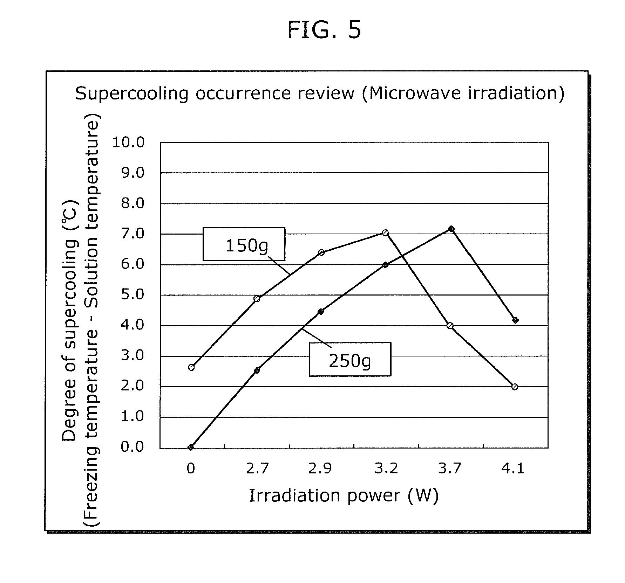

   FIG. 5 is a graph showing a relationship between output power of a microwave generation unit and a degree of supercooling.
[FIG. 6A]

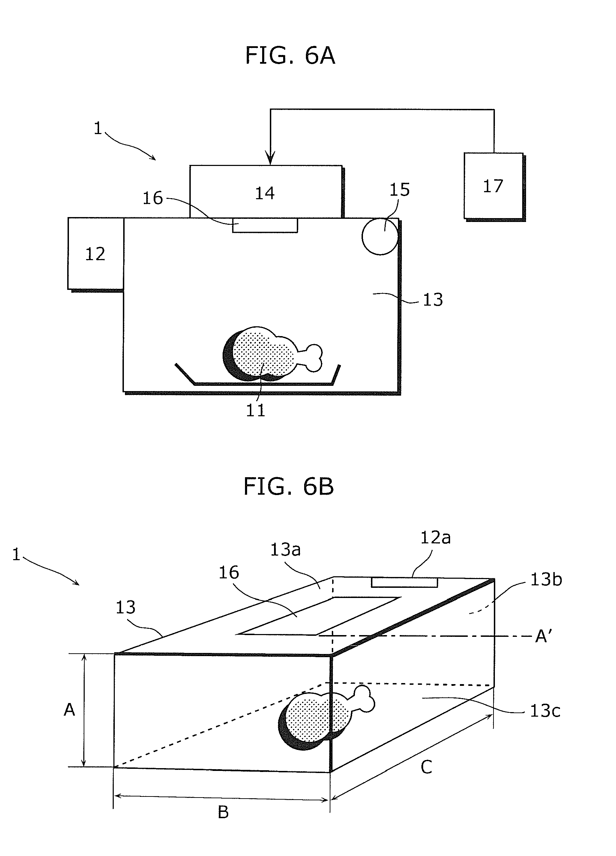

   FIG. 6A is a schematic diagram showing a storage device.
[FIG. 6B]
   FIG. 6B is a diagram showing a schematic perspective view of the storage device.
[FIG. 7]

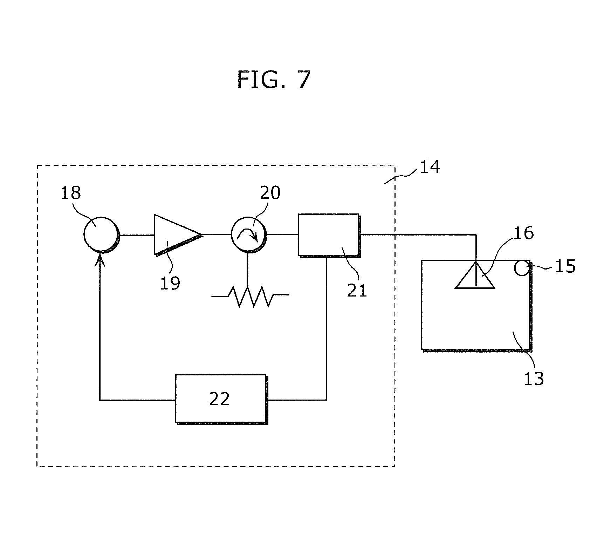

   FIG. 7 is a schematic diagram showing a microwave generation unit.
[FIG. 8]

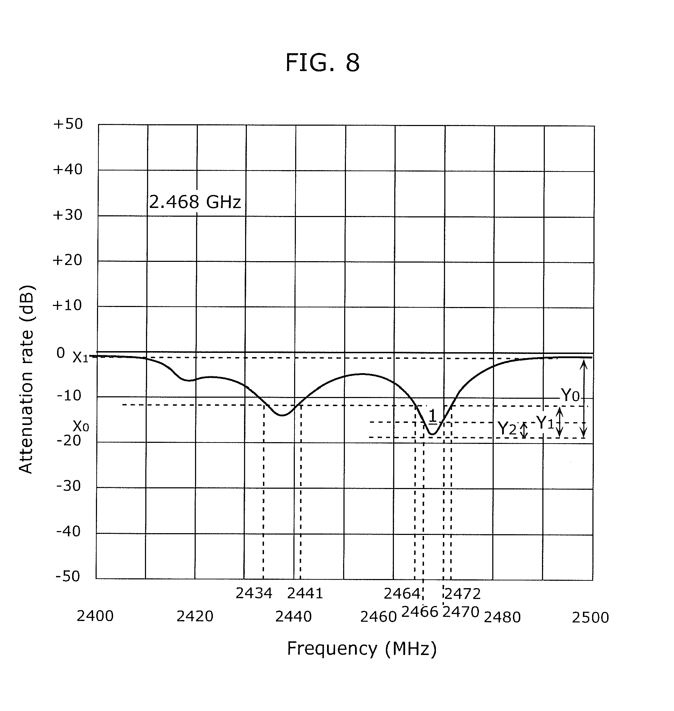

   FIG. 8 is a graph showing a relationship between a frequency and an attenuation rate due to a reflected wave, in the case where the microwave is applied.
[FIG. 9]

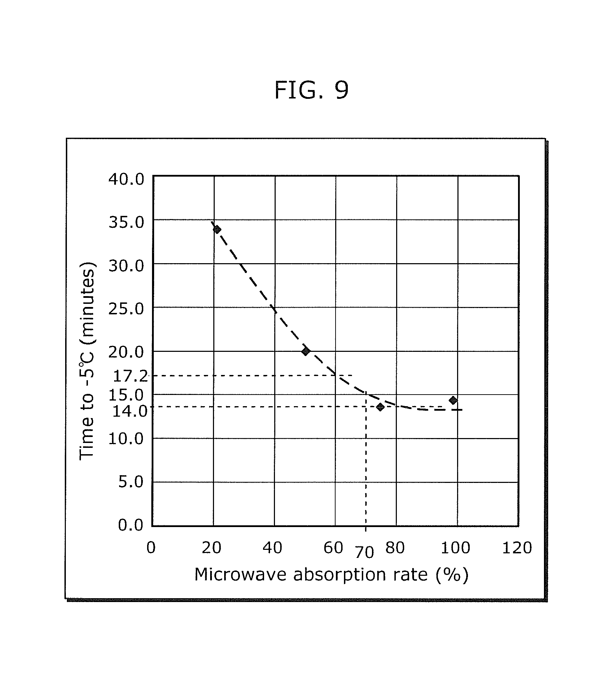

   FIG. 9 is a graph showing a relationship between a microwave absorption rate and a thawing time.
[FIG. 10]

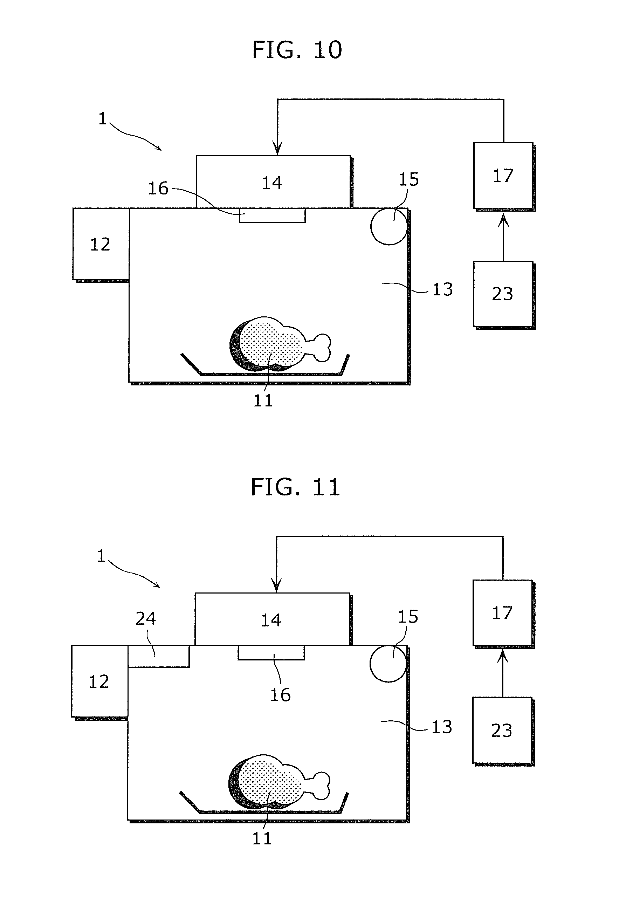

   FIG. 10 is a schematic diagram showing another storage device.
[FIG. 11]
   FIG. 11 is a schematic diagram showing another storage device.
[FIG. 12]

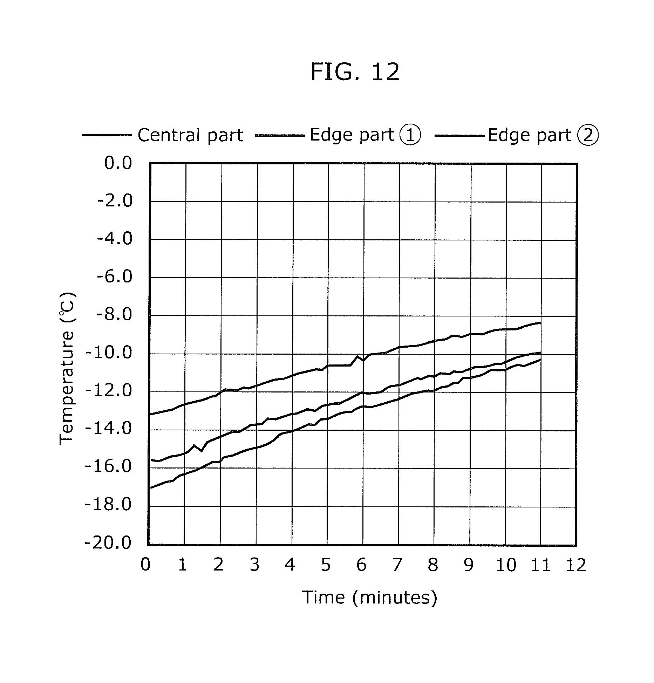

   FIG. 12 is a graph showing a relationship between a thawing time and a temperature for each part of the object.

### [Description of Embodiments]

The following is a description of embodiments according to the present invention, with reference to the drawings. It should be noted that the present invention is not limited to these embodiments.

### (First Embodiment)

FIG. 1 is a graph showing a relationship between a time and a temperature for each part of an object which is to be frozen by a storage method according to the present invention. FIG. 2 shows a graph for a comparison purpose.

The object is 200 g of beef. FIG. 1 shows a case where a microwave is applied during a freezing process. Moreover, FIG. 1 shows temporal changes in temperature at three parts, which are a central part (inner center), a right edge part (surface), and a left edge part (surface) of the object.

The microwave was applied when the temperature at any one of the aforementioned three parts became 5°C or lower.

In the present embodiment, timing of applying the microwave was when the temperature became 5°C. This is because water molecules start to link together at this temperature and, by applying the microwave at this timing, ice nucleation and ice crystal growth are prevented and the object is thus kept from being partially frozen.

When the microwave is applied when the temperature of the object is below a freezing point of the object, ice resists absorbing the microwave and, therefore, a large amount of electric power is required. This ends up against energy conservation.

When the microwave starts to be applied at room temperature, the object may generate heat before cooled and thus may be heated.

For this reason, it is preferable to apply the microwave when the temperature of the object is included in a range from the freezing point to 10°C inclusive at which the object starts to be cooled. Or, it is more preferable to apply the microwave when the temperature is equal to or lower than 5°C at which water molecules start to link together.

The object was cooled and frozen using electric power larger than electric power required for the microwave application.

For a comparison purpose, FIG. 2 shows temperatures at three parts, which are a central part (inner center), a right edge part (surface), and a left edge part (surface) of the object (namely, 200 g of beef). In the case shown in FIG. 2, the object was cooled under the same conditions as described above, except that the microwave was not applied. From a comparison between FIG. 1 and FIG. 2, it is understood that the temperature variations at the three parts are larger when the microwave is not applied.

In general, since the object releases heat from the surface, the right and left edge parts are the first to be cooled and then the temperature of the object accordingly starts to fall. On the other hand, when the microwave is applied during the freezing process, the radio wave is concentrated on the right and left edge parts which are easily cooled. Thus, the object can be frozen while a temperature difference between the inner center and surfaces of the object is being reduced.

Moreover, the object frozen with the microwave application and the object frozen without the microwave application were stored under an atmosphere at -20°C for three days and, after this, these objects were thawed by being left under an atmosphere at 5°C for 24 hours. Then, the amounts of drip loss upon thawing were measured. As a result, the drip loss from the object frozen with the microwave application was 0.3 g, whereas the drip loss from the object frozen without the microwave application was 1.2 g. From this result, it is confirmed that high-quality freezing with less cell destructions can be achieved by applying the microwave and thus reducing the temperature variations.

Also, in the case of using tofu as the object, it was confirmed that the temperature variations were reduced through the microwave application. In addition, the soft-material object like tofu frozen with the microwave application showed no change in external appearance after thawing. However, the object without the microwave application had cracking on the surface.

Moreover, the drip loss from the object frozen without the microwave application was about five times larger than the drip loss from the object frozen with the microwave application.

From this result, it is understood that the temperature variations can be reduced by applying the microwave to the object during the cooling process and that high-quality freezing can be accordingly achieved.

In the above experiment, the temperatures were measured at only three parts. Note that, in general, the temperature of an object is considered to decrease from the surface.

Here, the half-power depth of microwave is shallow and, for this reason, the microwave is likely to be absorbed by the surface. In other words, the microwave acts strongly on the surface of the object and, as a result, the temperature difference between the central part and surface of the object can be reduced.

### (Second Embodiment)

FIG. 3 is a graph showing cooling curves of the object in the cases where the microwave is applied and not applied.

FIG. 3 shows the cooling curves of water used as the object, in the cases where the object is frozen with the microwave application and where the object is frozen without the microwave application.

The microwave was applied when the temperature of water reached 5°C. Electric power used for applying the microwave was about 3 W, and electric power used for cooling the object was about 20 W which was larger than the electric power for applying the microwave.

As shown in FIG. 3, in the case where the microwave is not applied, the water starts to freeze at 0°C which is the freezing point of water, and then the temperature of water gradually decreases. That is, ice crystals are assumed to be formed.

On the other hand, in the case where the microwave is applied, the temperature of water decreases even after the freezing point and the water stays unfrozen in the supercooled state.

As described, by applying the microwave to the object immediately before ice crystals are formed, the object can be efficiently in the supercooled state while power consumption is kept low.

This is attributed to the fact that the microwave application allows water molecules to be single molecules by keeping the water molecules from linking together before freezing. This can prevent ice nucleation and ice crystal growth, and thus lead the object into the supercooled state.

FIG. 4 is a graph showing a relationship between a temperature of the object and a degree of supercooling in the case where the microwave is applied.

The object is water, and the temperature of water is 20°C before the cooling process.

As shown in FIG. 4, in the case where the microwave application and the cooling process are started at the same time, the supercooled state does not occur. However, it can be seen that when the temperature of water is lower at the time of the microwave application, the degree of supercooling is higher.

This is because when the microwave is applied before water molecules starts to link together, the water molecules become more active and thus become single molecules, which easily leads the water into the supercooled state.

As can be seen from FIG. 4, it is preferable to start applying the microwave to the object when the temperature of the object is equal to or lower than a threshold selected in a range from the freezing point to 10°C inclusive. Moreover, when the threshold is selected in a range from the freezing point to 5°C inclusive, there can be a high probability of resulting in the supercooled state.

FIG. 5 is a graph showing a relationship between output power of a microwave generation unit and a degree of supercooling.

As shown in FIG. 5, the microwave power and the degree of supercooling have a correlation to each other. Also, it can be understood that the microwave power needs to be controlled according to the weight of the object.

Thus, the weight of the object is detected using a weight sensor, or is calculated from a temperature decrease rate of the object, for example. Then, by accordingly controlling the output power of the microwave generation unit, the microwave whose power corresponds to the weight of the object is applied. With this, the object can be stably set in the supercooled state regardless of the weight.

Instead of detecting the weight using the weight sensor or calculating the weight from the temperature decrease of the object, the weight of the object may be inputted in advance.

Also, a type of food may be inputted in advance. For example, by providing buttons or the like used for making a selection from among meat, vegetable, fish, and prepared food, an optimum frequency corresponding to the type of food can be selected. Moreover, on the basis of the selected type of food in addition to the calculated or inputted weight, the microwave whose power corresponds to the type and weight of the object can be applied at an optimum frequency. This allows the irradiation efficiency to be more improved, and energy conservation can be thus achieved.

Moreover, an input unit capable of receiving an input of the food weight in dozens or hundreds of grams may be provided in order for a user to input an approximate weight. With this, even in the case where the weight sensor or the like is not provided, the microwave with power corresponding to the weight of the object can be applied using a simple construction. This allows the irradiation efficiency to be more improved, and energy conservation can be thus achieved.

The frequency of the applied microwave was 2.45 GHz. Note that, however, the same advantageous effect can be obtained as long as the frequency of the microwave is selected in a range from 300 MHz to 300 GHz. In the case where the frequency is below 300 MHz, the object needs to be, for example, sandwiched between electrodes so that the microwave can be absorbed efficiently. This means that the device itself becomes larger in size. Also in the case where the frequency is below 300 MHz, it is difficult to apply the microwave to the object evenly because the electromagnetic wave is concentrated on a specific area depending on the shape of the object.

For this reason, there may be areas where the water molecules can and cannot become single molecules in the object and this ends up leading to the ice nucleation. Moreover, in the case where the frequency is above 300 GHz, the electromagnetic wave is concentrated only on the surface and is not transmitted to the inside. Thus, a temperature difference is caused between the inside and surface of the object, thereby leading to the ice nucleation. As a result, the supercooled state does not occur.

Additionally, the best way to reduce the size of the device is to use an antenna for applying the microwave. In the case of applying the microwave at a frequency between 300 MHz and 300 GHz using the antenna, it is possible to reduce the size of the antenna and thus possible to reduce the size of the microwave generation unit.

### (Third Embodiment)

FIG. 6 is a schematic diagram showing a storage device.

As shown in this diagram, a storage device 1 cools and freezes an object 11, and includes a cooling unit 12, a cold storage compartment 13, a microwave generation unit 14, a temperature detection unit, and control unit 17.

The cooling unit 12 is a device which has a compressor and cools gas (air) or the like in a cooling cycle by forcefully causing a phase change between a gas and a liquid which are refrigerants. Although an air blower is provided to discharge the cooled air in the present embodiment, energy required by the cooling unit refers to power mainly for operating the compressor.

The cold storage compartment 13 is a box-shaped component which stores the object 11 and keeps the object cooled by taking in the cooled air generated by the cooling unit 12.

The microwave generation unit 14 is a device which generates a microwave to be applied to the object 11. The microwave generation unit 14 is controlled by the control unit 17 so that energy of the microwave to be absorbed by the object is smaller than energy required by the cooling unit 12.

FIG. 7 is a schematic diagram showing the microwave generation unit.

As shown in this diagram, the microwave generation unit 14 has a transmitter 18, an amplifier 19, a distributer 20, a reflected-power detection unit 21, a transmission control unit 22, and an antenna 16.

The transmitter 18 is a device which is capable of transmitting the microwave. In the present embodiment, the microwave is transmitted using a semiconductor device. Examples used for the semiconductor device include Si, GaAs, SiC, and GaN. In the present embodiment, GaN was used. Although a magnetron is used in general as the transmitter 18 which transmits the microwave, it is difficult to generate a magnetron of low power such as 100 W. On the other hand, by the use of the semiconductor device, a microwave of 100 W or lower can be generated and also the microwave energy can be adjusted minutely.

In the case where the microwave is generated using a magnetron as in the conventional method, this means that the output power is large. Therefore, it is difficult to minutely control the output so to make a temperature change gradual only at parts of the food where the temperature is low. To be more specific, since the microwave is applied to parts of the food where the temperature is higher as well as the parts where the temperature is low, it is impossible to reduce temperature variations caused during the cooling process. On the other hand, by applying the microwave using a low-power semiconductor at a temperature in a frozen or cooled atmosphere, the entire object is cooled while the microwave is efficiently acting on the parts where the temperature is low. Thus, the parts having low temperature can be prevented from decreasing in temperature, which allows the object to be cooled while the temperatures of the parts in the object are being made uniform.

Suppose that the microwave is to be applied by such a low-power semiconductor, and that a cooling unit such as cold air is also provided on a ceiling wall 13a or on an upper part of a back wall 13b which is one of vertical walls as shown in FIG. 6A and FIG. 6B. In this case, since the object 11 is cooled by the cold air from above, the upper surface of the object 11 to which the cold air is blown most is the first to be cooled due to heat transfer. This causes a temperature difference between the upper and bottom sides of the object 11. However, the antenna 16 having a function of evenly applying the microwave generated by the semiconductor to the object is provided above the object 11 in a planar shape. Thus, the microwave can be evenly applied to the object from above, and a temperature difference can be reduced by applying the microwave to the upper side of the object 11 where the temperature is low.

To be more specific, when a cold-air outlet 12a of the cooling unit 12 is provided at a position above a line A' which is a center line dividing a height A in two crosswise, that is, when the cold-air outlet 12a is provided at an upper part of the compartment as shown in FIG. 6B, the antenna 16 for applying the microwave is placed above the object 11.

Here, in the case where a cold-air outlet, a cooling plate, or the like is placed on a bottom of the cold storage compartment 13 and the object 11 is cooled from the bottom side, the same advantageous effect as above can be obtained by placing the antenna 16 below the object 11.

That is, it is preferable to place the antenna 16 at a position close to a cooling action unit such as the cold-air outlet or the cooling plate that is placed in the cold storage compartment 13 in order to cool the object 11 stored in the cold storage compartment 13, instead of placing the antenna 16 in the center of any walls surrounding the cold storage compartment 13.

In addition, it is preferable for the antenna 16, which is planar, to be placed so as to be along a wall (the ceiling wall 13a or a bottom wall) orthogonal to the height A which is shorter than each of a width B and a depth C of the cold storage compartment 13, as shown in FIG. 6B. Here, the relationship is represented as C>B>A. Moreover, it is preferable for the antenna 16 to have an area of between one-fourth and three-fourths of an area size of the bottom wall on which the food is to be placed. With this, irradiation can be evenly performed from the ceiling wall 13a whose size is B*C at the maximum, thereby evenly applying the microwave to a larger surface area of the food. Furthermore, since the length of irradiation applied to the object is within the height A which is the shortest, the food can be irradiated efficiently and evenly while the microwave energy is more saved.

Next, energy of the microwave application is explained.

It is preferable for the microwave generation unit 14 included in the storage device to be capable of generating a microwave of 100 W at the maximum. This is because high-quality thawing can be achieved using low power by controlling the power with high accuracy with a tolerance of about 10 W while applying the microwave to the food or the like, which is the object 11, in a frozen or cooled atmosphere.

It is more preferable for the microwave generation unit 14 to be capable of generating a microwave of 50 W at the maximum. With this, the storage device achieving energy conservation can be implemented. More specifically, when the maximum electric power is 50 W, energy loss caused from heat generation by the transmitter 18 can be prevented. Also, with this microwave generation unit 14, the power can be controlled with high accuracy with a tolerance of about 5 W. Thus, a more detailed control can be executed according to the object, thereby achieving particularly high-quality thawing.

It is more preferable for the maximum electric power which can be generated by the microwave generation unit 14 to be selected in a range from 30 W to 10 W inclusive. With the storage device including this microwave generation unit 14, both the microwave irradiation performed while cooling or freezing the object 11 and the microwave irradiation performed while thawing the frozen object can be implemented by the single transmitter 18. When the storage device 1 employs the transmitter 18 for both freezing and thawing, a single storage compartment can be used by switching the setting between freezing and thawing, for example. To be more specific, this can be implemented by providing a switching unit 23 which controls a mode of the storage device 1 and output of the microwave generation unit 14, as described in a fourth embodiment.

Also, the storage device 1 may include more than one microwave generation unit 14. By combining more than one microwave generation unit 14 which generates a microwave whose maximum electric power is relatively low (for example, 30 W), high-accuracy control becomes possible. Thus, freezing, cooling, and thawing of the high quality can be achieved. In particular, it is preferable to use the microwave generation units 14 each having a different maximum electric power. To be more specific, in the case where a total of the maximum electric powers of these microwave generation units 14 is 20 W, the storage device 1 may include, for instance, one microwave generation unit 14 whose maximum electric power is 10 W and two microwave generation units 14 each of whose maximum electric powers is 5 W. Here, in the case of thawing, the maximum electric power of 20 W is to be generated using all the microwave generation units 14. In the case of freezing, on the other hand, one of the microwave generation units 14 having the maximum electric power of 5 W is to be activated so that the microwave of 5 W or lower can be controlled with high accuracy with a tolerance of about 1 W. In this way, freezing and thawing of the high quality can be achieved.

Moreover, as compared to the case where a magnetron is used, the use of the semiconductor allows a significant size reduction to be achieved. This accordingly keeps the storage device 1 from increasing in size, which is preferable. It should be noted that the microwave outputted from the transmitter 18 is amplified by the amplifier 19 and is then applied to the object 11, via the distributer 20, from the antenna 16 provided in the cold storage compartment 13. Note that the aforementioned maximum electric power of the microwave refers to the strength of the microwave which is outputted from the antenna 16 after passing through the amplifier 19.

The reflected-power detection unit 21 is a device which detects a microwave that is reflected in the cold storage compartment 13 without being applied to the object 11. In the present embodiment, the reflected-power detection unit 21 functions as a temperature detection unit 15.

To be more specific, when the frequency of the microwave to be applied to the object 11 is set to be constant, the reflected power is different depending on the temperature of the object 11. Using this characteristic, the reflected-power detection unit 21 detects the temperature of the object 11.

It should be noted that the reflected-power detection unit 21 can maximize the amount of microwave supply according to the shape and size of the object 11. In other words, it is possible to detect a frequency at which the microwave can be applied to the object 11 with a very high degree of efficiency.

The following is a description of a specific method for detecting the frequency at which the microwave can be applied with a very high degree of efficiency. First, a microwave is outputted according to a predetermined output value, and the frequency of the output microwave is changed. Then, the reflected-power detection unit 21 detects a reflected wave for each frequency. For example, a range to change the microwave frequency is between 2400 MHz and 2500 MHz. FIG. 8 shows an example of a relationship between an attenuation rate calculated based on the reflected wave detected by the reflected-power detection unit 21 and a frequency, in the case where the frequency is changed in the range between 2400 MHz and 2500 MHz. As can be seen from FIG. 8, the attenuation rate changes according to the frequency. That is, it is understood that the rate of the microwave absorption by the object 11 is different depending on the frequency of the output microwave.

FIG. 9 shows a relationship between a microwave absorption rate and a thawing time taken to thaw the object to -5°C. As shown in FIG. 9, the thawing time is longer when the microwave absorption rate is lower even with the same output. In other words, the thawing time is shorter when the absorption rate is higher, although energy loss is larger.

The relationship between the microwave absorption rate and the attenuation rate (reflectance) is expressed as follows: the higher the microwave absorption rate, the lower the attenuation rate (reflectance). To be more specific, when the attenuation rate (reflectance) is lower, this means that the reflected wave on the walls or the like is smaller and that the applied microwave is absorbed more by the object.

On this account, by selecting a microwave frequency with the lowest reflectance that is detected by the reflected-power detection unit 21, the microwave can be applied with the highest efficiency. Thus, energy consumption due to reflection on the walls or the like can be prevented, which results in energy-efficient microwave irradiation.

Here, as shown in FIG. 9, when the microwave absorption rate is between 20% and 60%, the cooling time is reduced by five minutes for each increment of 10% in the absorption rate. However, when the microwave absorption rate is between 60% and 80%, the cooling time is reduced only by 1.6 minutes for each increment of 10% in the absorption rate and the change abruptly becomes gradual. Moreover, above 80% of the absorption rate, it can be seen that the cooling time hardly changes.

Hence, it is preferable to apply the microwave at a frequency X0 with the lowest reflectance (attenuation rate) that is detected by the reflected-power detection unit 21. However, considering that the cooling time is reduced only by 1.6 minutes for each increment of 10% between 60% and 80% of the absorption rate, it is possible to achieve irradiation with a sufficiently high degree of efficiency in practice when irradiation is performed mainly at frequencies in a range Y1 (2434 to 2441 HZ and 2465 to 2472 HZ in FIG. 8) which is between 0% and 40% (corresponding to 60% of the absorption rate or higher) of Y0 that is a difference between frequencies X0 and X1 with the lowest and highest attenuation rates respectively.

Also, when irradiation is performed mainly at frequencies in a range Y2 (2466 to 2472 HZ in FIG. 8) which is between 0% and 20% corresponding to 80% of the absorption rate or higher, energy-conservation irradiation equivalent to irradiation performed at X can be achieved with the highest efficiency.

Moreover, in the case where the microwave frequency can be changed in broad steps of, for example, 10 HZ instead of detailed steps of 1 HZ, control performed by the device is not complicated and therefore the number of breakdowns is further reduced. Accordingly, highly-practical microwave irradiation can be implemented.

Especially in the cold storage compartment 13 maintaining low temperatures using the cooling unit, when the microwave irradiation including cooling and heating actions which are mutually contradictory is performed, power is consumed to keep the cold storage compartment 13 at low temperatures in addition to power consumption of the transmitter 18. This is because the temperature of the cold storage compartment 13 rises due to heat generation by the transmitter 18. For this reason, by applying the microwave to the object with the highest efficiency as described above, energy conservation can be achieved by the storage device 1 as a whole.

Unlike a microwave oven, the storage device 1 can thaw the object 11 while keeping the object 11 cooled, by applying the microwave to the object 11 in the cold storage compartment 13 in a frozen or cooled atmosphere. Thus, temperature variations caused during thawing can be reduced. Here, when being thawed, the object 11 is sensitive to ambient temperature. Especially when the temperature inside the cold storage compartment 13 is high, the surface of the object 11 receives ambient heat and thus is thawed first. The microwave applied in this situation is easily absorbed only by the surface because the microwave is more easily absorbed by water than ice. As a result, a temperature difference is caused between the center part and surface part of the object, which leads to the temperature variations. On the other hand, when the compartment is at temperatures in a cooled or frozen atmosphere, the object 11 is not influenced by the compartment temperature. Therefore, the object can be evenly thawed by the use of microwave. Also, even when temperature variations are caused by any possibility, the object can be cooled in the compartment at low temperatures. This can reduce an increase in temperature caused by temperature variations and, as a result, can reduce the temperature variations.

Moreover, in the case of thawing using the microwave oven, when the object is forgotten and left in the compartment by any possibility, the temperature of the object increases. This results in quality loss. In the present embodiment, however, the frozen or cooled atmosphere can prevent the quality loss.

The transmission control unit 22 is a processing unit which controls the transmitter 18, so that an optimum frequency is selected and a microwave at the optimum frequency is generated. The application of the microwave at the optimum frequency allows the object 11 to absorb the microwave efficiently.

Also, frequencies at which the amount of microwave supply is maximized can be detected according to the shape and size of the object 11. Thus, a weight sensor for detecting the weight of the object and an image sensor for detecting the size of the object do not need to be separately provided. In other words, size reduction and cost reduction can be implemented.

The temperature detection unit 15 is a device which directly detects the temperature of the object 11 stored in the cold storage compartment 13. In the present embodiment, the temperature detection unit 15 is capable of detecting the temperature of the object 11 in a noncontacting manner. In the present embodiment, the temperature of the object 11 is measured by a plurality of devices including the reflected-power detection unit 21 and the temperature detection unit 15. Here, although the accuracy is improved when the temperature of the object 11 is measured by a combination of the devices, a plurality of devices are not necessarily required.

The control unit 17 is a device which controls an operation of the microwave generation unit 14. Here, the operation of the microwave generation unit 14 includes generating or not generating the microwave and, when generating the microwave, power and frequency of the microwave to be generated. In the present embodiment, the control unit 17 has a function of: activating the microwave generation unit 14 when the temperature of the object 11 reaches the threshold selected in the range from the freezing point to 10°C inclusive; and causing the microwave to be applied to the object 11, on the basis of information from the temperature detection unit 15 and information from the reflected-power detection unit 21 (either one of these information pieces may suffice).

Also, the control unit 17 has a function of calculating the temperature decrease rate of the object 11 (that is, the weight of the object 11) and controlling the microwave power to be applied to the object 11 by controlling the microwave generation unit 14, on the basis of the information pieces from the temperature detection unit 15 and the reflected-power detection unit 21 (either one of these information pieces may suffice).

Moreover, the control unit 17 has a function of increasing output of the microwave generation unit 14, on the basis of predetermined first information including information pieces which are given, after the microwave generation unit 14 is activated, from the temperature detection unit 15 and the reflected-power detection unit 21.

To be more specific, suppose that the first information is information indicating that a change in the temperature of the object 11 detected by the temperature detection unit 15 is within a predetermined range. In this case, it is determined that the cooling process could be achieved at uniform temperatures and that the supercooled state could be maintained up to a predetermined temperature. Thus, the supercooled state is forcefully terminated, by increasing the microwave output so as to cause a change to the temperature of the object 11. This is because the supercooled state kept too long may possibly result in quality loss due to, for example, bacterial growth. For this reason, the supercooled state is terminated through the microwave application, and then the object is instantly frozen so as to form small ice crystals evenly. Accordingly, high-quality freezing with no cell destruction can be achieved.

Also, the first information may be information given from an opening-closing detection device which detects opening and closing of a door of the cold storage compartment 13. For example, suppose that the first information is information indicating that a predetermined period of time has elapsed since the opening-closing detection device detected closing of the door. In this case, it may be determined that the supercooled state could be maintained up to a predetermined temperature, and the microwave output may be increased so as to cause a change to the temperature of the object 11. With this, the supercooled state can be forcefully terminated. In this case here, the temperature detection unit 15 does not need to be separately provided, and the predetermined period of time may only be detected from the detection result given by the opening-closing detection device. In other words, timing of terminating the supercooled state can be determined using a simple construction. In particular, since the object 11 can be stably set into the supercooled state though the microwave application, the timing of terminating the supercooled state can be controlled only according to a period of time during which the object 11 is placed and cooled in the cold storage compartment 13.

Moreover, the first information may be information indicating that a predetermined period of time has elapsed since the temperature of the object 11 reached a predetermined temperature. That is, the temperature of the object 11 is detected and then the supercooled state is terminated after the expiration of the predetermined period of time. Thus, the supercooled state can be detected with accuracy and also the frozen quality can be improved. Especially in the case of meat, when the supercooled state is maintained up to the predetermined temperature, the effect of supercooling is remarkable. However, even when the supercooled state can be maintained at temperatures below the predetermined temperature, the effect is not so remarkable. This means that by terminating the supercooled state after the predetermined period of time has elapse since the temperature of the object 11 reached the predetermined temperature, high-quality freezing can be achieved and a duration in which the microwave is applied can also be reduced. This accordingly leads to energy conservation.

It should be noted that the first information is not limited to these. For example, the first information may be information which is obtained from a timer (not illustrated) and which indicates that a predetermined period of time has elapsed since the microwave generation unit 14 was activated.

In this way, the object 11 can be frozen after the supercooled state is forcefully terminated through the application of high-energy microwave to the object 11.

Also, the cooling unit 12 may terminate the uniform-temperature freezing process, by increasing the cooling ability to reduce the temperature variations and performing rapid freezing when the temperature is below a predetermined temperature, on the basis of second information including information pieces from the temperature detection unit 15 and the reflected-power detection unit 21 (either one of these information pieces may suffice).

To be more specific, suppose that the second information is information indicating that a change in the temperature of the object 11 detected by the temperature detection unit 15 is within a predetermined range. In this case, it is determined that the supercooled state could be terminated. Thus, the object can be rapidly frozen by increasing the cooling ability. Also, the second information may be information indicating that the change in the detected temperature is beyond the predetermined range.

More specifically, when the supercooled state is terminated, fine ice crystals are instantly formed in the object and the temperature of the object rises up to the freezing point due to latent heat present at this time. Thus, by detecting this rise in the temperature of the object 11, whether the supercooled state has been terminated or not can be detected.

Especially after the supercooled state is terminated, the object 11 is not completely frozen and includes both fine ice crystals and water. Therefore, by rapidly freezing the water remaining after the termination of the supercooled state, it is possible to keep the fine ice crystals from growing and to prevent cells of the object 11 from being destroyed.

By increasing the amount or speed of cold air to be brought into the compartment storing the object 11, as a method of terminating the supercooled state, the supercooled state termination and the rapid freezing can be performed at the same time. Consequently, the cells of the object 11 can be prevented from being destroyed and higher-quality freezing can be achieved.

In this case, by stopping the microwave application as well as increasing the amount or speed of cold air, energy-efficient and prompt termination of the supercooled state can be executed. When the amount or speed of cold air is increased as in the present case, rapid cooling can be performed by decreasing a preset temperature of the compartment by 10 degrees.

Moreover, the second information may be information indicating a rise in the temperature of the object 11 even before the first information is obtained or even while the object 11 is being cooled. In this case, it is determined that the supercooled state has been terminated. Thus, the object can be rapidly frozen by increasing the cooling ability. With this, even when the supercooling process is terminated by any possibility before the object reaches the predetermined temperature, the object can be rapidly frozen. As a result, slow freezing can be prevented and high-quality freezing can be thus achieved.

Furthermore, the temperature detection unit 15 detects the temperature of the object 11, so that whether the supercooled state has been terminated is determined. However, whether the supercooled state has been terminated can be determined on the basis of the information from the reflected-power detection unit 21 as well.

To be more specific, the reflected-power detection unit 21 detects microwave that is reflected without being applied to the object 11. Whether the microwave is to be applied to the object 11 depends on the shape and temperature of the object 11. The microwave is easily absorbed by water in particular, and is hardly absorbed by ice. On this account, during the supercooled state in which the object 11 is in the state of water, the microwave is easily applied and thus the reflected power is low. On the other hand, when the supercooled state is terminated and ice crystals are formed, it becomes difficult for the object 11 to absorb the microwave, thereby increasing the the reflected power. Thus, the second information may be information indicating an increase in the reflected power. For example, the second information may be information indicating a change in the attenuation rate (in the direction of the increase in the reflected power). To be more specific, when the microwave was applied at a constant frequency, 2410 MHz, the attenuation rate was changed by about 40% before and after the termination of the supercooled state. Here, this information is used as the second information.

By detecting this change in the reflected power using the reflected-power detection unit 21, whether the supercooled state has been terminated can be determined.

It should be noted that the second information is not limited to these. For example, the second information may be information which is obtained from a timer (not illustrated) and which indicates that a predetermined period of time has elapsed since the output of the microwave generation unit 14 was increased.

With this, the temperature of the object 11 can be further decreased after the the zone of maximum ice crystal formation, and thus the quality of the object 11 can be maintained high.

With the storage device 1 described thus far, the object 11 can be easily set into the supercooled state and, after the termination of the supercooled state, rapidly freezing is performed so as to keep ice crystals the object 11 fine. Consequently, high-quality freezing without cell destructions can be achieved.

### (Fourth Embodiment)

FIG. 10 is a schematic diagram showing another storage device.

A storage device 1 shown in this diagram is capable of freezing and thawing an object 11.

The storage device 1 in the present embodiment is different from the storage device in the above embodiment in that the present storage device 1 includes a switching unit 23 which controls a mode of the storage device 1 and output of the microwave generation unit 14 according to the mode. The components identical to those in the above embodiment are assigned the same numerals used in the above embodiment, and the explanations thereof are not repeated.

The switching unit 23 controls the microwave generation unit 14. When freezing the object 11, the switching unit 23 causes the output of the microwave generation unit 14 to be low. By cooling the object 11 with energy larger than energy to be absorbed by the object 11, the object 11 is maintained in the supercooled state or frozen after the supercooled state. On the other hand, when thawing the object 11, the switching unit 23 causes the output of the microwave generation unit 14 to be high. By cooling the object 11 with energy smaller than energy to be absorbed by the object 11, the object 11 is thawed. It should be noted that the switching unit 23 can also control the cooling unit 12 so as to reduce the amount of cold air discharged into the cold compartment 13.

To be more specific, according to a selection made by the user between freezing or thawing using the switching unit 23, the output of the microwave generation unit 14 is caused to become low so as to set the object 11 into the supercooled state when freezing is selected whereas the output of the microwave generation unit 14 is caused to become high so as to thaw the object 11 when thawing is selected.

In the present embodiment, thawing was performed in the case where the output of the microwave generation unit 14 was set at 20 W and the temperature in the cold storage compartment 13 was 5°C. As a result, although it took 50 minutes to thaw the object 11, temperature variations were only about 3°C from measurements made at 23 spots of the object after thawing. On the other hand, the microwave output was increased to about 300 W, assuming the case of using a microwave oven or the like. As a result, although it took about 10 minutes to thaw the object, temperature variations were about 30°C after thawing and a relative difference between the measured temperatures was about 10 times.

Moreover, as a common thawing method, the object was thawed in a refrigerator. As a result, although temperature variations were about 3°C as in the case of the present embodiment, it took as much as about 20 hours to thaw the object.

Thus, by slowly thawing the object with low electric power as in the present embodiment, high-quality thawing with less temperature variations can be achieved. Especially in the case where the object is thawed through the application of high-power microwave by using a microwave oven or the like, when the composition of the object includes a portion where "tan δ · εr" is large, a phenomenon known as "runaway heating" which refers to abnormal overheating may be caused because the microwave is absorbed intensively by this portion. This phenomenon often occurs in the case of thawing frozen food. That is, when a part of the frozen food where a loss coefficient is small is thawed, the loss coefficient of this part becomes larger and the microwave energy is thus efficiently absorbed by this part. This results in a problem that the rest of the food remains frozen while the melted part is cooked.

On the other hand, by slowly thawing the object 11 with low-power microwave, variations in the dielectric loss of the object 11 can be reduced and runaway heating does not occur. Accordingly, high-quality thawing with less temperature variations can be achieved.

Generally speaking, the microwave generation unit 14 used in a microwave oven is usually a magnetron. In the case of applying the low-power microwave using the microwave oven, the output limit of the magnetron is about 200 to 300 W. However, when a semiconductor is used as the microwave generation unit 14, the microwave output can be adjusted even down to several watts. Also, the frequency, which cannot be changed in the case of the magnetron, can be changed. Thus, thawing can be performed at a frequency corresponding to the state of the object. By using the reflected-power detection unit 21 in particular, the reflected power during thawing can be detected. Since the microwave frequency is adjusted according to the result given by the reflected-power detection 21, the microwave can be applied to the object more efficiently and a thawing time may be thus reduced.

Moreover, since the storage device in the present embodiment includes the cooling unit 12, the temperature inside the compartment can be adjusted when thawing is to be performed. Particularly in the case where thawing is performed under a low-temperature atmosphere, although the edge parts of the object are thawed under the temperature of the compartment, the microwave is prevented from concentrating on this thawed parts. Thus, higher-quality thawing can be achieved.

As described thus far, the storage device in the present embodiment can reduce the temperature variations caused after thawing and can also reduce the thawing time.

Also, as shown in FIG. 11, the storage device 1 may further include a heating unit 24 which heats the inside of the cold storage compartment. The heating unit 24 may be provided inside or outside the cold storage compartment 13. By heating the cold storage compartment 13, the thawing time can be reduced.

By the use of the heating unit 24, thawing can be efficiently performed. That is, thawing can be completed in a short time while the thawing quality is maintained.

In the present embodiment, the thawing time was reduced to 30 minutes by increasing the temperature inside the cold storage compartment 13 by 10°C using the heating unit 24. Moreover, the temperature variations after thawing could be reduced to below 5°C.

The storage device 1 in the present embodiment can implement both high-quality freezing and high-quality thawing using the single unit which is the microwave generation unit 14. Thus, the storage device 1 having a high level of capability to keep freshness can be provided. When it is desired to reduce the thawing time, the heating unit 24 and the microwave generation unit 14 can be activated at the same time. With this, efficient thawing can be achieved while keeping the thawing quality high and reducing the thawing time.

By informing the user that the temperature of the object 11 to be thawed is between -5°C and -10°C, the user can take out the object 11 from the cold storage compartment 13 to cut the quantity needed with a knife or the like and then can refreeze the rest.

It should be noted that the present invention is not limited to the above embodiments. For example, another embodiment which is implemented through a combination of arbitrary components described in the present specification may be included as the embodiment according to the present invention. Also note that modifications obtained through applying various modifications to the above embodiments that may be conceived by those skilled in the art without departing from the scope of the present invention, that is, without departing the meaning of the words described in Claims, are intended to be included within the scope of the present invention.

For example, the maximum power of the microwave generation unit 14 used for thawing is 20 W in the present embodiment. However, the present invention is not limited to this. When the microwave generation unit 14 is used for thawing, it is preferable to use the microwave generation unit 14 whose maximum power is 100 W or lower. Or, it is more preferable to use the microwave generation unit 14 whose maximum power is 50 W or lower.

FIG. 12 is a graph showing a relationship between a thawing time and a temperature for each part of the object.

As shown in this diagram, the temperatures of the object 11 are measured at three parts, which are a central part, a right edge part (1), and a left edge part (2). Note here that the output of the microwave generation unit 14 used for thawing was set at 10 W and the temperature in the cold storage compartment 13 was 5°C. As shown, the temperature of the object was -8°C at which the object can be cut into small quantities with a knife. In other words, since the object 11 can be thawed without going through the zone of maximum ice crystal formation, refreezing becomes possible.

### (Fifth Embodiment)

The present embodiment employs a storage device 1 which stores an object 11 at low temperatures, by applying an appropriate microwave to the cooled object 11 as a stimulus while promoting the growth of nutrients inside the object 11.

A switching unit 23 has a function of switching the process to be performed on the food, among freezing, thawing, and cooling. To be more specific, when freezing the object 11, the switching unit 23 causes the output of the microwave generation unit 14 to be low. By cooling the object 11 with energy larger than energy to be absorbed by the object 11, the object 11 is maintained in the supercooled state or frozen after the supercooled state. On the other hand, when thawing the object 11, the switching unit 23 causes the output of the microwave generation unit 14 to be high. By cooling the object 11 with energy smaller than energy to be absorbed by the object 11, the object 11 is thawed. Moreover, when cooling the object 11, the object is cooled with energy larger than energy to be absorbed by the object 11. Through the application of an appropriate microwave as a stimulus, the object 11 is cooled while the growth of nutrients inside the object 11 is being promoted. To be more specific, according to a selection made by the user among freezing, thawing, and cooling using the switching unit 23, the microwave generation unit 14 is controlled as follows. When freezing is selected, the output of the microwave generation unit 14 is caused to become low so as to set the object 11 into the supercooled state. When thawing is selected, the output of the microwave generation unit 14 is caused to become high so as to thaw the object 11. When cooling is selected, the output of the microwave generation unit 14 is appropriately adjusted in order for the object not to be heated, so that cooling is executed while the growth of nutrients inside the object 11 is being promoted.

In the present embodiment, the microwave was applied to spinach for four hours in the cases where the temperature in the cold storage compartment 13 was set at -5°C, -1°C, and 0.5°C and the output of the microwave generation unit 14 was set at 2.9 W. As a result, as compared to the cases without the microwave application (the object was only left for four hours at each of the temperatures), Vitamin C showed a tendency to increase at each of the temperatures. To be more specific, with the microwave application, vitamin C increased by 16% at -5°C and by 12% at -1°C. Also, it was confirmed that vitamin C increased by about 5% at 0.5°C.

Moreover, the microwave was applied to a strawberry and asparagus for four hours in the cases where the temperature in the cold storage compartment 13 was set at 5°C and the output of the microwave generation unit 14 was set at 2.9 W. As a result, sugar contents of both the strawberry and asparagus increased by about 10%, as compared to the cases where a strawberry and asparagus were left for four hours at 5°C without the microwave application.

This is attributed to the fact that the inside of the object reacts to the microwave applied as the stimulus by the microwave generation unit 14 and produces a slight amount of active oxygen inside. Then, it is believed that, in order to reduce the active oxygen produced inside, the object generates nutrients such as vitamin C and sugar, which are antioxidant materials, so as to detoxify the active oxygen through biological defense reaction. It becomes possible to increase the nutrients inside the object by the use of this biological defense reaction.

### [Industrial Applicability]

The storage method and the storage device according to the present invention can be applied to a household refrigerator as well as an industrial refrigerator, and can also be applied to cooking devices.

### [Reference Signs List]

- 11: Object
- 12: Cooling unit
- 13: Cold storage compartment
- 14: Microwave generation unit
- 15: Temperature detection unit
- 16: Antenna
- 17: Control unit
- 18: Transmitter
- 19: Amplifier
- 20: Distributer
- 21: Reflected-power detection unit
- 22: Control unit
- 23: Switching unit
- 24: Heating unit

## Claims

1. A storage device which cools and stores an object, said storage device comprising:
a cold storage compartment which stores the object;
a cooling unit configured to cool the object stored in said cold storage compartment;
a microwave generation unit including a semiconductor device which generates a microwave to be applied to the object, a maximum electric power of the generated microwave being 100 watts or lower; and
a control unit configured to control an operation of said microwave generation unit.

2. The storage device according to Claim 1, further comprising
a temperature detection unit configured to detect a temperature of the object,
wherein, when said cooling unit is controlled so that the temperature of the object decreases, said control unit is configured to cause said microwave generation unit to generate the microwave when said temperature detection unit detects the temperature equal to or lower than a predetermined threshold.

3. The storage device according to Claim 2,
wherein the predetermined threshold is a value selected in a range from a freezing point of the object to 10 degrees Celsius inclusive.

4. The storage device according to any one of Claim 1 to Claim 3, wherein, after said microwave generation unit generates the microwave, said control unit is configured to cause electric power of the microwave generated by said microwave generation unit to be increased according to predetermined first information.

5. The storage device according to any one of Claim 1 to Claim 3, wherein, after said microwave generation unit generates the microwave, said cooling unit is configured to increase a cooling ability according to predetermined second information.

6. The storage device according to Claim 2,
wherein said temperature detection unit includes a reflected-power detection unit, and is configured to detect the temperature of the object by detecting electric power of the microwave reflected without being applied to the object out of the microwave generated by said microwave generation unit.

7. The storage device according to Claim 1,
wherein a frequency of the microwave generated by said microwave generation unit is selected in a range from 300 megahertz to 300 gigahertz inclusive.

8. The storage device according to Claim 1,
wherein said microwave generation unit has a function of generating the microwave having electric power capable of thawing the object.

9. The storage device according to Claim 1,
wherein said cooling unit has a function of setting the object into a frozen state, and
said microwave generation unit is configured to apply the microwave to the object which is in an unfrozen state.

10. The storage device according to Claim 1,
wherein said cooling unit has a function of setting the object into a cooled state, and
said microwave generation unit is configured to apply the microwave to the object which is in the cooled state.

11. A storage method of cooling and storing an object, said storage method comprising
applying a microwave such that electric power of the microwave to be absorbed by the object is smaller than electric power of the microwave required to cool the object.

12. The storage method according to Claim 11,
wherein said applying is started when a temperature of the object becomes equal to or lower than a threshold selected in a range from a freezing point of the object to 10 degrees Celsius inclusive.

13. The storage method according to Claim 12, further comprising terminating a supercooled state of the object by increasing electric power of the microwave applied to the object, after said applying.

14. The storage method according to Claim 13, further comprising increasing an ability of cooling the object, after said terminating.

15. The storage method according to Claim 12, further comprising setting the object into a cooled state,
wherein said applying is performed on the object which is in the cooled state.

16. A storage method of cooling an object, and promoting growth of a nutrient included in the object by applying an appropriate stimulus to the object.

17. The storage method according to Claim 16,
wherein the stimulus is a microwave applied to the object.
